# EUROPÄISCHE PATENTSCHRIFT

(11) **EP 0 418 920 B1**
(45) Veröffentlichungstag und Bekanntmachung des Hinweises auf die Patenterteilung: **13.04.1994**
(21) Anmeldenummer: 90118193.3
(22) Anmeldetag: 21.09.1990
(51) Int. Cl.: F16L 11/12, F16L 11/08

(54) **Verfahren zur Herstellung eines Schlauches für den Transport von Dampf**
Method for producing a hose for transporting steam
Méthode pour la fabrication d'un tuyau souple pour le transport de vapeur

(30) Priorität: 22.09.1989 DE 3931687
(43) Veröffentlichungstag der Anmeldung: 27.03.1991
(73) Patentinhaber: PHOENIX AKTIENGESELLSCHAFT, 21079 Hamburg (DE)
(72) Erfinder: Hellmig, Winfried, D-2150 Buxtehude (DE); Friederich, Hans-Werner, Dipl.-Ing., D-2090 Winsen (DE)

(56) Entgegenhaltungen:
- AU-B- 424 443
- GB-A- 2 114 257
- US-A- 2 461 594
- US-A- 3 420 276
- US-A- 4 111 237
- US-A- 4 306 591
- US-A- 4 604 155

## Beschreibung

Die Erfindung betrifft ein Verfahren zum Herstellen eines Schlauches für den Transport von Dampf, bestehend aus einer möglichst dampfundurchlässigen Innenschicht und einer möglichst dampfdurchlässigen Außenschicht aus Gummi oder gummiähnlichem Werkstoff sowie einem eingebetteten Festigkeitsträger, der über seinen gesamten Querschnitt und alle Grundbausteine (Filamente, Spinnfasern) umgebend mit einer Gummilösung oder gummiähnlichen Lösung getränkt ist.

In der US-A-2 461 594 ist ein gattungsgemäßer Schlauch beschrieben, bei dem der Festigkeitsträger aus textilen Werkstoffen (z.B. Baumwolle, Polyamid) besteht. Die Herstellung des Schlauches erfolgt dabei durch Extrusion mit anschließender Vulkanisation. Ferner sind mehrschichtige Schläuche (Folienschläuche) zum Transport eines heißen Mediums (Flüssigkeit oder Gas) bekannt, die Glasmaterial als Festigkeitsträger aufweisen (DE-C-34 13 788, DE-C-34 41 879). Die Herstellung dieser Folienschläuche, die bis zu zehn Schichten besitzen, ist jedoch äußerst aufwendig. Im Zusammenhang mit der Herstellung von Gummiartikeln mit eingebettetem Glasmaterial als Festigkeitsträger wird zudem auf die AU-B-424 443 verwiesen.

Schläuche für den Transport von Dampf sind jedoch oftmals den Ansprüchen nicht gewachsen. Dampf diffundiert während des Einsatzes durch die Schlauchinnenschicht, sammelt sich in der Festigkeitsträgerebene an und zerstört dort häufig nicht nur die Haftung innerhalb der verschiedenen Schichten des Schlauches, sonderen vor allem auch die Festigkeitsträger selbst. Besonders zerstörerisch ist ein diskontinuierlicher Betrieb, u.z. durch den häufigen Wechsel zwischen flüssiger Feuchtigkeit und Dampf innerhalb der Schlauchwand in der Festigkeitsträgerebene.

Die Aufgabe der Erfindung besteht nun in der Verhinderung der Ursachen für die häufige Zerstörung bisheriger Dampfschläuche; vor allem durch den Einsatz eines Festigkeitsträgers, der nicht nur eine gute Widerstandsfähigkeit gegen hohe Temperaturen aufweist, keine Feuchtigkeit aufnimmt, sondern darüber hinaus auch dem durch die Schlauchinnenschicht diffundierenden Dampf keine Speichermöglichkeit bietet.

Gelöst wird diese Aufgabe durch ein Verfahren, bei dem als Festigkeitsträger ein Glasfaden als Einfachgarn verwendet wird, wobei das Einfachgarn mit einer Garndrehung versehen wird oder die Einfachgarne zu einem einfachen Zwirn ausgebildet werden, wobei wiederum das Einfachgarn vor der Drehung bzw. Verzwirnung mit einer Gummilösung oder gummiähnlichen Lösung getränkt wird, die vor der Endvulkanisation des Schlauches zwischen 25 % und 75 %, insbesondere zwischen 50 % und 60 %, vorvulkanisiert wird.

Durch die Kombination dieser Lösungsmerkmale wird erreicht, daß der Festigkeitsträger dem Dampf keine Speichermöglichkeit bietet. Dadurch daß die Schlauchinnenschicht möglichst dampfundurchlässig ist, wird zudem die Dampfdiffusion durch den Schlauch stark herabgesetzt. Da im Gegensatz zur Innenschicht die Außenschicht möglichst dampfdurchlässig ist, kann Dampf, dessen Diffusion durch die Schlauchwand nicht ganz zu verhindern ist, leicht nach außen gelangen, was die Lebensdauer des Schlauches zusätzlich erhöht.

Als Glasfaden wird zweckmäßigerweise ein E-Glas, ein C-Glas, ein Stapelfasergarn oder ein Endlos-Filamentgarn verwendet, wobei die Filamente eine Stärke von 6 bis 11 µ, insbesondere von 9 µ, aufweisen. Die aus getränkten Einfachgarnen gebildeten einfachen Zwirne können zudem zu einem Cord verzwirnt werden. Der Festigkeitsträger kann in gewendelter oder geflochtener Form aufgebracht werden.

Zweckmäßigerweise wird ferner der Festigkeitsträger in einer oder mehreren Doppellagen aufgebracht, wobei diese mit einer nicht vorvulkanisierten Gummilösung oder gummiähnlichen Lösung raumfüllend getränkt wird. Auf diese Weise nimmt selbst ein komplex aufgebautes Festigkeitsträgerpaket weder Feuchtigkeit auf noch bietet es dem Dampf eine Speichermöglichkeit. Bei Verwendung von zwei Doppellagen ist es zudem zweckmäßig, eine Zwischenschicht aus Gummi oder gummiähnlichem Werkstoff einzubringen, wobei als Zwischenschicht eine dünne Platte aus Gummi oder gummiähnlichem Werkstoff, der unter Temperatur sehr fließfähig ist, oder eine nicht vorvulkanisierte Gummilösung oder gummiähnliche Lösung verwendet wird.

Der Festigkeitsträger wird direkt auf die Schlauchinnenschicht aufgebracht. Alternativ hierzu besteht die Möglichkeit, zwischen Schlauchinnenschicht und Festigkeitsträger eine nicht vorvulkanisierte Gummilösung oder gummiähnliche Lösung einzubringen. Das hier beschriebene Prinzip gilt auch für die Schlauchaußenschicht.

Es ist zudem zweckmäßig, daß sämtliche Schichten des Schlauches haftend miteinander verbunden werden.

Zweckmäßigerweise wird die Schlauchaußenschicht des fertig vulkanisierten Schlauches geprickt. Dabei werden Löcher durch die Schlauchdecke bis in die Festigkeitsträgerebene gestochen, durch die das eingedrungene Medium abdampfen kann. Eine Vorrichtung zum kontinuierlichen Pricken von Schläuchen ist in der DE-A-39 35 687 beschrieben.

Die Gummilösung oder gummiähnliche Lösung ist werkstoffmäßig üblicherweise der Innenschicht und Außenschicht des Schlauches angepaßt.

Bezüglich der in den Ansprüchen verwendeten Begriffe Filamente, Spinnfasern, Garn und Zwirn wird auf die DIN 60 900 verwiesen.

Die Erfindung wird nun anhand eines Ausführungsbeispiels schematisch dargestellt. Dabei ist der Schlauch (1) aus folgenden Schichten aufgebaut:
Schlauchinnenschicht (2), möglichst dampfundurchlässig
Festigkeitsträgerlagen (3)
Zwischenschicht (4)
Schlauchaußenschicht (5), möglichst dampfdurchlässig
Die beiden Festigkeitsträgerlagen (3) bestehen hier jeweils aus einer Doppellage. Dabei ist der Zwischenbereich (6) innerhalb der Festigkeitsträgerlagen (3) raumfüllend mit einer nicht vorvulkanisierten Gummilösung oder gummiähnlichen Lösung getränkt. Die raumfüllende Tränkung mit einer derartigen nicht vorvulkanisierten Lösung ist jedoch nicht auf dieses spezielle Festigkeitsträgersystem mit Doppellagen beschränkt, sondern gilt für alle Festigkeitsträgersysteme, bei denen Zwischenbereiche innerhalb einer Festigkeitsträgerlage vorhanden sind.

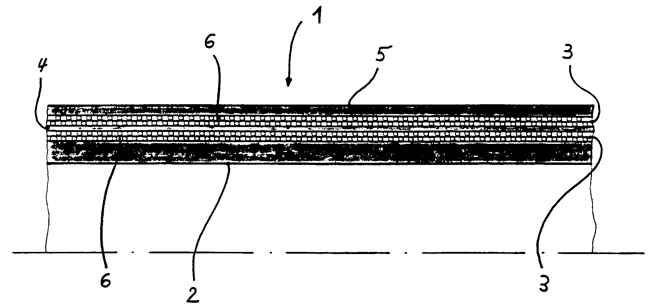

## Patentansprüche

1. Verfahren zum Herstellen eines Schlauches (1) für den Transport von Dampf, bestehend aus einer möglichst dampfundurchlässigen Innenschicht (2) und einer möglichst dampfdurchlässigen Außenschicht (5) aus Gummi oder gummiähnlichem Werkstoff sowie einem eingebetteten Festigkeitsträger (3), der über seinen gesamten Querschnitt und alle Grundbausteine (Filamente, Spinnfasern) umgebend mit einer Gummilösung oder gummiähnlichen Lösung getränkt ist, dadurch gekennzeichnet, daß als Festigkeitsträger (3) ein Glasfaden als Einfachgarn verwendet wird, wobei das Einfachgarn mit einer Garndrehung versehen wird oder die Einfachgarne zu einem einfachen Zwirn ausgebildet werden, wobei wiederum das Einfachgarn vor der Drehung bzw. Verzwirnung mit einer Gummilösung oder gummiähnlichen Lösung getränkt wird, die vor der Endvulkanisation des Schlauches (1) zwischen 25 % und 75 %, insbesondere zwischen 50 % und 60 %, vorvulkanisiert wird.

2. Verfahren nach Anspruch 1, dadurch gekennzeichnet, daß als Glasfaden ein E-Glas, ein C-Glas, ein Stapelfasergarn oder ein Endlos-Filamentgarn verwendet wird, wobei die Filamente eine Stärke von 6 bis 11 µ, insbesondere von 9 µ, aufweisen.

3. Verfahren nach Anspruch 1 oder 2, dadurch gekennzeichnet, daß die aus getränkten Einfachgarnen gebildeten einfachen Zwirne zu einem Cord verzwirnt werden.

4. Verfahren nach einem der Ansprüche 1 bis 3, dadurch gekennzeichnet, daß der Festigkeitsträger (3) in gewendelter oder geflochtener Form aufgebracht wird.

5. Verfahren nach einem der Ansprüche 1 bis 4, dadurch gekennzeichnet, daß der Festigkeitsträger (3) in einer oder mehreren Doppellagen aufgebracht wird.

6. Verfahren nach Anspruch 5, dadurch gekennzeichnet, daß bei einer Doppellage des Festigkeitsträgers (3) diese mit einer nicht vorvulkanisierten Gummilösung oder gummiähnlichen Lösung raumfüllend getränkt wird.

7. Verfahren nach Anspruch 5 oder 6, dadurch gekennzeichnet, daß zwischen zwei Doppellagen des Festigkeitsträgers (3) eine Zwischenschicht (4) aus Gummi oder gummiähnlichem Werkstoff eingebracht wird.

8. Verfahren nach Anspruch 7, dadurch gekennzeichnet, daß als Zwischenschicht (4) eine dünne Platte aus Gummi oder gummiähnlichem Werkstoff, der unter Temperatur sehr fließfähig ist, oder eine nicht vorvulkanisierte Gummilösung oder gummiähnliche Lösung verwendet wird.

9. Verfahren nach einem der Ansprüche 1 bis 8, dadurch gekennzeichnet, daß der Festigkeitsträger (3) direkt auf die Schlauchinnenschicht (2) aufgebracht wird.

10. Verfahren nach einem der Ansprüche 1 bis 8, dadurch gekennzeichnet, daß zwischen Schlauchinnenschicht (2) und Festigkeitsträger (3) eine nicht vorvulkanisierte Gummilösung oder gummiähnliche Lösung aufgebracht wird.

11. Verfahren nach einem der Ansprüche 1 bis 10, dadurch gekennzeichnet, daß die Schlauchaußenschicht (5) direkt auf den Festigkeitsträger (3) aufgebracht wird.

12. Verfahren nach einem der Ansprüche 1 bis 10, dadurch gekennzeichnet, daß zwischen Festigkeitsträger (3) und Schlauchaußenschicht (5) eine nicht vorvulkanisierte Gummilösung oder gummiähnliche Lösung aufgebracht wird.

13. Verfahren nach einem der Ansprüche 1 bis 12, dadurch gekennzeichnet, daß sämtliche Schichten des Schlauches haftend miteinander verbunden werden.

14. Verfahren nach einem der Ansprüche 1 bis 13, dadurch gekennzeichnet, daß die Schlauchaußenschicht (5) des fertig vulkanisierten Schlauches geprickt wird.

## Claims

1. A process for the production of a flexible pipe (1) for the transport of steam, comprising an inner layer (2) which is as impermeable as possible to steam and an outer layer (5) which is as permeable as possible to steam composed of rubber or rubber-like material, and of an embedded strengthening means (3) which over its entire cross-section and surrounding all the basic modules (filaments, spun fibres) is saturated with a rubber solution or rubber-like solution, characterised in that a glass thread in the form of a single yarn is used as strengthening means (3), where the single yarn is provided with a yarn twist or the single yarns are formed into a single twine, where the single yarn is again saturated, prior to the twisting or twining, with a rubber solution or rubber-like solution which, prior to the final vulcanisation of the flexible pipe (1), is prevulcanised between 25% and 75%, in particular between 50% and 60%.

2. A process as claimed in Claim 1, characterised in that E-glass, C-glass, a stable fibre yarn or a continuous filament yarn is used as glass thread, where the filaments possess a thickness of 6 to 11 µ, in particular 9 µ.

3. A process as claimed in Claim 1 or 2, characterised in that the single twines formed from saturated single yarns are twined to form a cord.

4. A process as claimed in one of Claims 1 to 3, characterised in that the strengthening means (3) is applied in coiled or braided form.

5. A process as claimed in one of Claims 1 to 4, characterised in that the strengthening means (3) is applied in one or more double layers.

6. A process as claimed in Claim 5, characterised in that in the case of a double layer of the strengthening means (3) the latter is saturated in space-filling fashion with a non-prevulcanised rubber solution or rubber-like solution.

7. A process as claimed in Claim 5 or 6, characterised in that an intermediate layer (4) of rubber or rubber-like material is introduced between two double layers of the strengthening means (3).

8. A process as claimed in Claim 7, characterised in that a thin sheet of rubber or rubber-like material which is extremely free-flowing in the presence of heat, or a non-prevulcanised rubber solution or rubber-like solution is used as intermediate layer (4).

9. A process as claimed in one of Claims 1 to 8, characterised in that the strengthening means (3) is applied directly to the inner layer (2) of the flexible pipe.

10. A process as claimed in one of Claims 1 to 8, characterised in that a non-prevulcanised rubber solution or rubber-like solution is applied between the inner layer (2) of the flexible pipe and the strengthening means (3).

11. A process as claimed in one of Claims 1 to 10, characterised in that the outer layer (5) of the flexible pipe is applied directly to the strengthening means (3).

12. A process as claimed in one of Claims 1 to 10, characterised in that a non-prevulcanised rubber solution or rubber-like solution is applied between the strengthening means (3) and the outer layer (5) of the flexible pipe.

13. A process as claimed in one of Claims 1 to 12, characterised in that all the layers of the flexible pipe are adherently connected to one another.

14. A process as claimed in one of Claims 1 to 13, characterised in that the outer layer (5) of the completely vulcanised flexible pipe is pricked.

## Revendications

1. Procédé de fabrication d'un tuyau flexible (1) pour le transport de vapeur d'eau, se composant d'une couche interne (2) aussi imperméable à la vapeur que possible et d'une couche externe (5) aussi perméable à la vapeur que possible, en caoutchouc ou en une matière caoutchouteuse, ainsi que d'un support de renforcement inclus (3) qui est imprégné d'une solution de caoutchouc ou d'une solution semblable au caoutchouc sur toute sa section transversale et tout autour de ses éléments constitutifs de base (filaments, fibres discontinues), caractérisé en ce qu'on utilise, comme support de renforcement (3), un fil de verre sous forme de fil simple, le fil simple étant muni d'une torsion ou les fils simples étant mis sous forme d'un fil retors simple, le fil simple étant de son côté imprégné, avant le tordage ou le retordage, d'une solution de caoutchouc ou d'une solution semblable au caoutchouc qui est pré-vulcanisée à raison de 25% à 75%, en particulier à raison de 50% à 60%, avant la vulcanisation finale du tuyau flexible (1).

2. Procédé selon la revendication , caractérisé en ce qu'on utilise, comme fil de verre, un verre E (non alcalin), un verre C, un fil de verranne ou un fil continu de filaments, les filaments présentant une épaisseur de 6 à 11 µm, en particulier de 9 µm.

3. Procédé selon la revendication 1 ou 2, caractérisé en ce que les fils retors simple, formés de fils simples imprégnés, sont retordus en une corde.

4. Procédé selon l'une quelconque des revendications 1 à 3, caractérisé en ce que le support de renforcement (3) est disposé sous forme enroulée en hélice ou tressée.

5. Procédé selon l'une quelconque des revendications 1 à 4, caractérisé en ce que le support de renforcement (3) est disposé en une ou plusieurs doubles couches.

6. Procédé selon la revendication 5, caractérisé en ce que, dans le cas d'une double couche du support de renforcement (3), celle-ci est imprégnée d'une solution de caoutchouc ou d'une solution semblable au caoutchouc non pré-vulcanisée, de manière à remplir tout l'espace.

7. Procédé selon la revendication 5 ou 6, caractérisé en ce qu'une couche intermédiaire (4) en caoutchouc ou en une matière caoutchouteuse est interposée entre deux doubles couches du support de renforcement (3).

8. Procédé selon la revendication 7, caractérisé en ce qu'on utilise, comme couche intermédiaire (4), une plaque mince en caoutchouc ou en une matière caoutchouteuse qui est très fluide à température élevée, ou une solution de caoutchouc ou une solution semblable au caoutchouc non pré-vulcanisée.

9. Procédé selon l'une quelconque des revendications 1 à 8, caractérisé en ce que le support de renforcement (3) est disposé directement sur la couche interne (2) du tuyau flexible.

10. Procédé selon l'une quelconque des revendications 1 à 8, caractérisé en ce qu'une solution de caoutchouc ou une solution semblable au caoutchouc non pré-vulcanisée est disposée entre la couche interne (2) du tuyau flexible et le support de renforcement (3).

11. Procédé selon l'une quelconque des revendications 1 à 10, caractérisé en ce que la couche externe (5) du tuyau flexible est disposée directement sur le support de renforcement (3).

12. Procédé selon l'une quelconque des revendications 1 à 10, caractérisé en ce qu'une solution de caoutchouc ou une solution semblable au caoutchouc non pré-vulcanisée est disposée entre le support de renforcement (3) et la couche externe (5) du tuyau flexible.

13. Procédé selon l'une quelconque des revendications 1 à 12, caractérisé en ce que toutes les couches du tuyau flexible sont unies entre elles par adhérence.

14. Procédé selon l'une quelconque des revendications 1 à 13, caractérisé en ce que la couche externe (5) du tuyau flexible définitivement vulcanisé est munie de piqûres.
